(19) **Europäisches Patentamt**

**European Patent Office**

**Office européen des brevets**

(11) **EP 1 275 989 A1**

(12) **EUROPEAN PATENT APPLICATION**

(43) Date of publication:
**15.01.2003 Bulletin 2003/03**

(51) Int Cl.[7]: **G02B 6/16**, G02B 6/293

(21) Application number: **01440206.9**

(22) Date of filing: **05.07.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **ALCATEL**
**75008 Paris (FR)**

(72) Inventors:
• **Riant, Isabelle**
**91400 Orsay (FR)**

• **De Barros, Carlos**
**92100 Boulogne-Billancourt (FR)**
• **Lopez, Thierry**
**75013 Paris (FR)**

(74) Representative: **Rausch, Gabriele, Dr. et al**
**Alcatel**
**Intellectual Property Department, Stuttgart, Postfach 300929**
**70449 Stuttgart (DE)**

(54) **Method for imprinting slanted Bragg gratings into optical fibers and optical fibers produced by such method**

(57) A method for imprinting a plurality of slanted Bragg gratings into a photosensitive optical fiber by exposure of said fiber to a pattern of light shaped in space and/or time and of suitable wavelength is presented. According to the invention a basic slanted Bragg grating of a determined period is imprinted into said fiber, while, simultaneously, a periodic phase-shifting modulation function is applied to said single slanted Bragg grating. In its preferred embodiment the imprinting light pattern is generated by a phase mask from a UV laser, with periodical phase-shift in the phase mask pattern.

**Figure 1**

**Description**

The invention relates to a method for imprinting slanted Bragg gratings into photosensitive optical fibers as well as to optical fibers produced by such method.

Bragg gratings in optical fibers have been known to be extremely useful features in the field of telecommunication for quite some years. Versatile filter and reflector systems can be carried out conveniently by use of such gratings. An important application is the optical gain equalization in long distance fiber lines. In order to compensate for the loss over long distances optical amplifiers are incorporated into the lines in certain spatial intervals. Unfortunately, in multiplexed systems the amplifier gain usually is not constant over the whole range of all wavelength channels. Thus, a gain equalization by spatially succeeding filter systems is necessary. The filter characteristics, i.e. the "shape" of the filter, has to be optimized according to the characteristics of the fiber line, the amplifier systems and the wavelength range.

Slanted Bragg gratings SBG are used to couple light of certain over amplified wavelengths into the cladding modes of the fiber, while other wavelengths remain unaffected. The SBG is a standard fiber Bragg grating tilted during photo inscription with an angle between the grating fringes and the normal of the fiber axis. This SBG couples part of the fiber-guided mode into radiation modes or cladding modes in a counter-propagating direction. The envelope of couplings into the different cladding modes yields the filter shape. The envelope of couplings is defined by the specific fibre design. It is for example known from FR-A-9806904, to provide a photosensitive cladding to reduce the spectral width of the filter and a reduced photosensitivity in the core to decrease the back reflection, whereby the grating can be short (800 μm) or chirped to suppress the modulation due to coupling into discrete modes. By chirping the fringe period along the grating length, or by shortening the grating, each discrete filter corresponding to the couling into each cladding mode is enlarged, so that they can overlap each other.

Especially in systems of a wide spectral range or in systems with very uneven spectral distribution, however, a single slanted Bragg grating often is not enough to yield a satisfying equalization of the amplifier gain. Thus, a chain of several slanted Bragg gratings with different characteristics can be concatenated one after the other to represent a row of spatially succeeding filters. The succeeding fiber sections containing one filter each are spliced together. This technique can be used for submarine applications, where no thermal disturbances of the connections are to be expected and where dimension problems don't play an outstanding role. In terrestrial applications, however, the concatenated filters would have to be athermally packaged, which would be technical extremely demanding and would lead to intolerably large packages.

Standard Bragg gratings, where the fringes are perpendicular to the fiber axis, can be designed in a more complex way, yielding a gain equalization over a wide spectral range using one unique filter easily to be packaged. However, a major drawback of standard Bragg gratings is their back reflectivity, making it necessary to provide for an optical isolator in the optical amplifier.

A method for generating complex standard Bragg gratings is described in US 6,072,926. The Bragg grating is imprinted into a photosensitive optical fiber by exposure of said fiber to a pattern of light shaped in space and in time. A spatial light pattern of interference fringes is generated by sending a primary UV laser beam to a suitably shaped phase mask. The primary laser beam is moved across the phase mask during the imprinting process, which corresponds to a temporal component of the light pattern, the fiber is exposed to. According to the intensity of the interference pattern in certain positions in the photosensitive fiber its refractive index is permanently changed. This leads to a spatial modulation of the fiber's refractive index, namely the Bragg grating.

For sake of the ease of calculation and predictability of the filter's characteristics, it would be desirable to simply superimpose a number of Bragg gratings, each with a different period and with a different modulation index variation. However because the growth of the photoinduced index variation is not linear it is not possible to superimpose several Bragg gratings by simply exposing the same part of the fiber to the imprinting light several times using different phase masks, especially when expositions are long or when the number of Bragg gratings to photoimprint is large. Even if it was, there would remain the serious drawback of the necessity to carry out as many imprinting steps as there are gratings to be superimposed.

It is a particular object of the current invention to provide a method to fabricate a low back-reflection filter with a complex spectral shape while imprinting a unique slanted Bragg grating into a photosensitive optical fiber. To this end it is suggested, according to the invention, to imprint a slanted Bragg grating with a chirped period into the photosensitive fiber and simultaneously incorporate periodic phase-shifts along the grating. This is exactly equivalent to a true superposition of several slanted Bragg gratings. The optical characteristics of the filter system achieved this way is equivalent to the one of a filter system composed from several slanted Bragg gratings of different periods and, according to the value of the periodic phase-shift, also of different modulation index variation. So far a filter characteristics like this could only be achieved by concatenation of the different Bragg gratings in spatial succession. However, a filter system according to the invention does not suffer from the above mentioned drawbacks of package size.

The equivalence between a plurality of truly superimposed slanted Bragg gratings (e.g. by repeated exposure of the same part of the fiber to the light patterns generated by different phase masks one after the other) can be understood by looking to the simple example of superimposing two slanted Bragg gratings of the respective periods $\Lambda_1$ and $\Lambda_2$. Each grating represents a periodic modulation of the fiber's refractive index. Like any periodic function each grating can be expanded into it's Fourier series. For the sake of simplicity only the first order terms shall be regarded. However, in most cases the actual modulation of the fiber's refractive index, representing the grating, is almost purely sinusoidal. At least in those cases the higher order terms of the Fourier expansion can truly be neglected.

$$\text{Bragg grating 1:} \qquad B_1 \sim \sin(2\pi \cdot x / \Lambda_1) \tag{1a}$$

$$\text{Bragg grating 2:} \qquad B_2 \sim \sin(2\pi \cdot x / \Lambda_2), \tag{1b}$$

where x represents the spatial position along the fiber. As the absolute amplitudes of change of the refractive index are of no special concern here, they have been dropped and replaced by the proportionality sign "$\sim$".

Mathematically a superposition corresponds to an addition. From the well known formula

$$\sin a + \sin b = 2 \sin \{\tfrac{1}{2}(a+b)\} \cos \{\tfrac{1}{2}(a-b)\} \tag{2}$$

it can be calculated:

$$
\begin{aligned}
B_1 + B_2 \\
&\sim \sin(2\pi \cdot x / \Lambda_1) + \sin(2\pi \cdot x / \Lambda_2) \\
&= 2 \sin \{\pi x (1/\Lambda_1 + 1/\Lambda_2)\} \cos \{\pi x (1/\Lambda_1 - 1/\Lambda_2)\} \\
&= 2 \sin \{2\pi \cdot x / \Lambda_i\} \cos \{2\pi \cdot x \, \Lambda_b\},
\end{aligned} \tag{3}
$$

where the intermediate period

$$\Lambda_i = 2 \Lambda_1 \Lambda_2 / (\Lambda_1 + \Lambda_2) \tag{4}$$

and the beat period

$$\Lambda_b = 2 \Lambda_1 \Lambda_2 / (\Lambda_1 - \Lambda_2). \tag{5}$$

The formula (3) clearly shows, that the superposition of two slanted Bragg gratings of periods $\Lambda_1$ and $\Lambda_2$ yields one basic grating of the intermediate period $\Lambda_i$, modulated sinusoidally with beat period $\Lambda_b$. This can be compared to an electromagnetic carrier frequency (corresponding to the basic grating of period $\Lambda_i$), amplitude modulated with the lower beat frequency (corresponding to the sinusoidal modulation function of beat period $\Lambda_b$). Because of the linear characteristics of the Fourier expansion the above calculation is valid also for the higher order terms, which, thus, don't have to be regarded individually, if they have to be considered at all.

The formula (3) does not exactly represent the experimental condition, but is only a simple model, that illustrates the fundamental features. The formula (3) has been found by not only neglecting the higher order terms of the Fourier expansion (which is justified in most cases), but also by assuming the zeroth order term to vanish (see formulas (1 a) and (1 b)). This is not true. The imprinting light makes the local refractive index vary from the undisturbed value in only one direction, usually increasing it. Furthermore the formula (3) assumes the equality of the amplitudes of change of the refractive index in both the Bragg gratings. This is not necessary and in most real cases even not desirable, because different wavelengths would need different amounts of coupling to the cladding modes. However, the fundamental statement, namely the equivalence between two superimposed gratings with one basic grating periodically modulated, remains true.

The periodic change of sign in the sinusoidal modulation at every half of the beat period $\Lambda_b$ is made by periodically inserting a phase shift at half the beat period $\Lambda_b$ in the grating profile. The modulation can have a sinusoidal shape as presented above or simply a square shape with a periodic change of sign or another shape with a periodic change of sign.

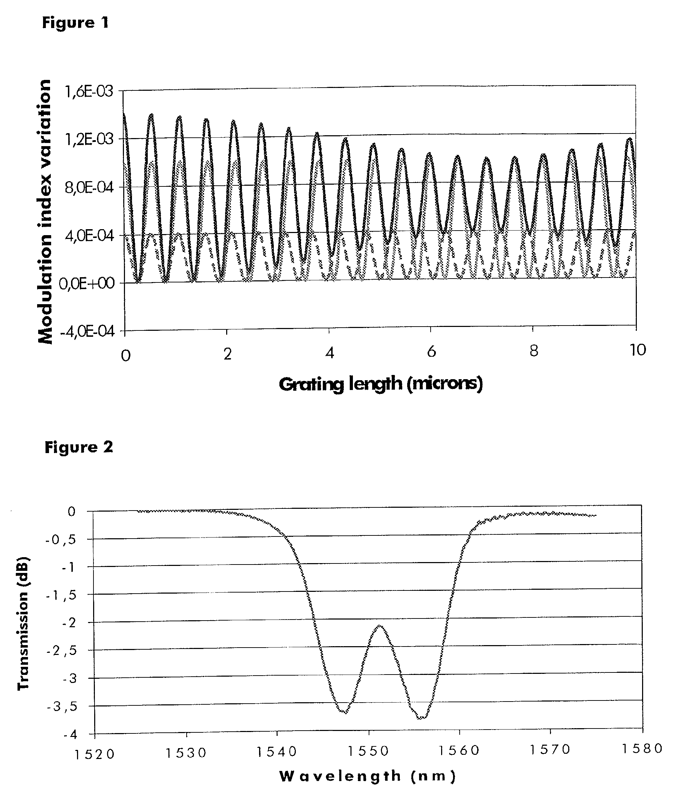

Fig. 1 shows the calculated graphs of a more realistic case: a first, weak grating (grating 1) of period $\Lambda_1 = 0{,}527$ µm with a modulation depth of $2 \bullet 10^{-4}$ has been superimposed with a second, stronger grating (grating 2) of period $\Lambda_2 = 0{,}547$ µm with a modulation depth of $5 \bullet 10^{-4}$. Fig. 1 also shows the superimposed grating of the basic period $\Lambda_i = 0{,}536$µm modulated sinusoidally with the beat period $\Lambda_b = 29$ µm.

More complex filter systems can be achieved by applying a more complex, though still periodic modulation function to the basic grating. This is equivalent to the superposition of more than two gratings. The concrete form of the periodic modulation function can be achieved by trigonomic calculations analogue to the kind demonstrated above.

The invented method can be carried out using known techniques. This is an important advantage, because existing instrumentation can be used, being an important cost factor. It is preferred to imprint the basic slanted Bragg grating using the phase mask technique. The periodic phase-shift function is preferably inserted in the phase mask pattern. It can also be applied by shifting the phase mask during the exposure using a piezo-electric stage. If a chirp is to be applied, it is preferred to use a chirped phase mask.

Fig. 2 shows the transmission spectrum of two superimposed Bragg grating filters with periods respectively of 0,5335 µm and of 0,5365 µm.

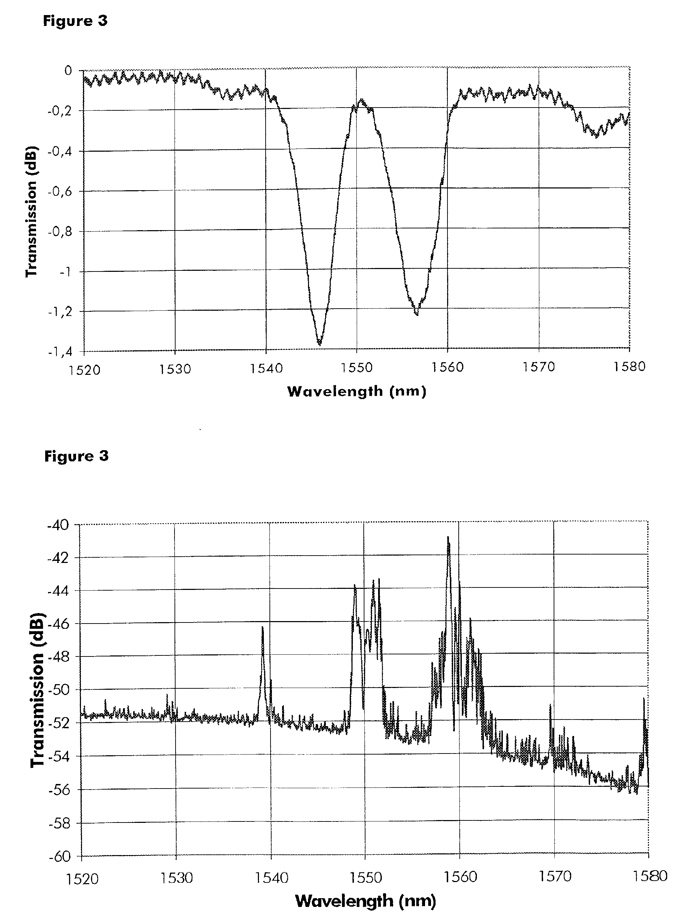

Fig. 3 shows the transmission spectrum of a slanted Bragg grating filter, that had been created using the invented method in its preferred embodiment A unique slanted Bragg grating has been realized with an using a phase-mask of period 1085 nm chirped with a rate of 4 nm/cm. The external angle is 2°. Phase-shifts have been periodically inserted with a period of 80 microns. Two peaks of efficient outcoupling to the cladding modes can clearly be distinguished.

Fig. 4 shows the reflection spectrum corresponding to the transmission of Fig. 3. The presence of the periodic secondary peaks of reflection (other than the two major ones) proves that a phase-shifting function has been used for the realization of the filter.

So far, such a filter characteristics was only achievable by two independent filter systems. Thanks to the invention now a single and easy to produce filter can be used.

**Claims**

1. A method for imprinting a plurality of slanted Bragg gratings into a photosensitive optical fiber by exposure of said fiber to a pattern of light shaped in space and/or time and of suitable wavelength,
   **characterized by that**
   a basic slanted Bragg grating of a determined period is imprinted into said fiber, while, simultaneously, a periodic phase-shifting function is applied to said single slanted Bragg grating.

2. A method according to claim 1, **characterized by** that the amplitude of the periodic phase-shifting function depends sinusoidally on the spatial distance from either end of the slanted Bragg grating.

3. A method according to claim 1, **characterized by** that the amplitude of the periodic phase-shifting function depends quadratically on the spatial distance from either end of the slanted Bragg grating.

4. A method according to claim 1, **characterized by** that the amplitude of the periodic phase-shifting function is constant on the spatial distance of the slanted Bragg grating.

5. A method according to claim 1, **characterized by** that the spatial period of the phase-shifting function is uniform.

6. A method according to claim 1, **characterized by** that the spatial period of the phase-shifting function is chirped.

7. A method according to claim 1, **characterized by** that the phase-shifting function is a combination of several phase-shifting functions with uniform spatial period.

8. A method according to claim 1, **characterized by** that the phase-shifting function is a combination of several phase-shifting functions with chirped spatial period.

9. A method according to one of the precedent claims, **characterized by** that the period of the basic slanted Bragg grating is chirped.

10. A method according to one of the precedent claims, **characterized by** that a phase mask is used to generate the imprinting light pattern from a laser beam.

11. A method according to claim 5, **characterized by** that the periodical phase-shifting function is generated by incorporating a periodical phase-shift in the phase mask pattern.

12. A method according to claim 5, **characterized by** that the periodical phase-shifting function is generated by shifting the phase mask appropriately during the imprinting process.

13. A method according to claim 5, **characterized by** that the phase mask is shifted using a piezo-electric stage.

14. A method according to one of claims 3 to 6, **characterized by** that a chirped phase mask is used.

15. An optical fiber carrying at least one slanted Bragg grating with periodical phase-shifts, imprinted into said fiber by a method according to one of the precedent claims.

**Figure 1**

**Figure 2**

**Figure 3**

**Figure 3**

# EP 1 275 989 A1

<table>
<tr><td colspan="3"><b>European Patent Office</b></td><td><b>EUROPEAN SEARCH REPORT</b></td><td><b>Application Number</b><br>EP 01 44 0206</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 22255 A (IBSEN MORTEN ;LAMING RICHARD IAN (GB); UNIV SOUTHAMPTON (GB)) 6 May 1999 (1999-05-06) | 1,10,11, 15 | G02B6/16 G02B6/293 |
| Y | * page 1, line 25 - line 26 *<br><br>* page 2, line 7 - line 10 *<br>- - - | 2-9, 12-14 | |
| X | IBSEN M ET AL: "30 dB sampled gratings in germanosilicate planar waveguides" ELECTRONICS LETTERS, IEE STEVENAGE, GB, vol. 32, no. 24, 21 November 1996 (1996-11-21), pages 2233-2235, XP006006029 ISSN: 0013-5194 * figures 1,3 * * chapter "Theoretical background" *<br>- - - | 1,10,11, 15 | |
| X | WO 01 22126 A (STEPANOV DMITRII YU ;SCEATS MARK (AU); UNIV SYDNEY (AU)) 29 March 2001 (2001-03-29) * page 4, line 24 - page 5, line 6 * * figures 1-4 *<br>- - - | 1,15 | TECHNICAL FIELDS SEARCHED (Int.Cl.7)<br><br>G02B |
| A | PATENT ABSTRACTS OF JAPAN vol. 1999, no. 08, 30 June 1999 (1999-06-30) -& JP 11 084117 A (FUJIKURA LTD), 26 March 1999 (1999-03-26) * abstract *<br>- - - | 1 | |
| A,D | FR 2 779 237 A (CIT ALCATEL) 3 December 1999 (1999-12-03) * page 3, line 27 - page 4, line 8 *<br>- - -<br>-/-- | 1,15 | |

The present search report has been drawn up for all claims

| Place of search | Date of completion of the search | Examiner |
|---|---|---|
| BERLIN | 12 December 2001 | Luck, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 275 989 A1**

European Patent Office

**EUROPEAN SEARCH REPORT**

Application Number

EP 01 44 0206

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | REID D C J ET AL: "PHASE-SHIFTED MOIRE GRATING FIBRE RESONATORS" ELECTRONICS LETTERS, IEE STEVENAGE, GB, vol. 26, no. 1, 4 January 1990 (1990-01-04), pages 10-12, XP000105640 ISSN: 0013-5194 * figure 1 * * chapter "Grating design and fabrication" | 2 | |
| Y | ALBERT J ET AL: "Moire phase masks for automatic pure apodisation of fibre Bragg gratings" ELECTRONICS LETTERS, IEE STEVENAGE, GB, vol. 32, no. 24, 21 November 1996 (1996-11-21), pages 2260-2261, XP006005976 ISSN: 0013-5194 * figures 1,2 * * figure captions * | 3 | |
| Y | EGGLETON B J ET AL: "Long periodic superstructure Bragg gratings in optical fibres" ELECTRONICS LETTERS, IEE STEVENAGE, GB, vol. 30, no. 19, 15 September 1994 (1994-09-15), pages 1620-1622, XP006001080 ISSN: 0013-5194 * figure 1 * chapter "Background" | 4 | TECHNICAL FIELDS SEARCHED (Int.Cl.7) |
| Y | WO 00 50944 A (PENG JIANGDE ;FENG KAI MING (US); CAI JIN XING (US); KHOSRAVANI RE) 31 August 2000 (2000-08-31) * figure 15 * | 5-9,14 | |

-/--

The present search report has been drawn up for all claims

| Place of search | Date of completion of the search | Examiner |
|---|---|---|
| BERLIN | 12 December 2001 | Luck, W |

## EUROPEAN SEARCH REPORT

**European Patent Office**

**Application Number**

EP 01 44 0206

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | COLE M J ET AL: "Moving fibre/phase mask-scanning beam technique for enhanced flexibility in producing fibre gratings with uniform phase mask" ELECTRONICS LETTERS, IEE STEVENAGE, GB, vol. 31, no. 17, 17 August 1995 (1995-08-17), pages 1488-1490, XP006003242 ISSN: 0013-5194 * page 1488, line 26 - line 31 * | 12,13 | |
| A,D | US 6 072 926 A (COLE MARTIN ET AL) 6 June 2000 (2000-06-06) * figure 1 * | 11 | |
| | | | TECHNICAL FIELDS SEARCHED (Int.Cl.7) |

The present search report has been drawn up for all claims

| Place of search | Date of completion of the search | Examiner |
|---|---|---|
| BERLIN | 12 December 2001 | Luck, W |

**EP 1 275 989 A1**

## ANNEX TO THE EUROPEAN SEARCH REPORT
## ON EUROPEAN PATENT APPLICATION NO.                    EP 01 44 0206

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2001

| Patent document cited in search report | | Publication date | Patent family member(s) | | Publication date |
|---|---|---|---|---|---|
| WO 9922255 | A | 06-05-1999 | AU | 739118 B2 | 04-10-2001 |
| | | | AU | 9551698 A | 17-05-1999 |
| | | | BR | 9813265 A | 22-08-2000 |
| | | | EP | 1032854 A1 | 06-09-2000 |
| | | | WO | 9922255 A1 | 06-05-1999 |
| WO 0122126 | A | 29-03-2001 | WO | 0122126 A1 | 29-03-2001 |
| | | | AU | 7632700 A | 24-04-2001 |
| JP 11084117 | A | 26-03-1999 | NONE | | |
| FR 2779237 | A | 03-12-1999 | FR | 2779239 A1 | 03-12-1999 |
| | | | FR | 2779238 A1 | 03-12-1999 |
| | | | FR | 2779237 A1 | 03-12-1999 |
| | | | EP | 1022595 A1 | 26-07-2000 |
| | | | JP | 2000266945 A | 29-09-2000 |
| | | | US | 6321008 B1 | 20-11-2001 |
| | | | EP | 0962790 A1 | 08-12-1999 |
| | | | JP | 2000009941 A | 14-01-2000 |
| | | | US | 6292606 B1 | 18-09-2001 |
| | | | EP | 0962791 A1 | 08-12-1999 |
| | | | JP | 2000009956 A | 14-01-2000 |
| | | | US | 6314221 B1 | 06-11-2001 |
| WO 0050944 | A | 31-08-2000 | AU | 5265500 A | 14-09-2000 |
| | | | WO | 0050944 A1 | 31-08-2000 |
| | | | US | 2001021294 A1 | 13-09-2001 |
| US 6072926 | A | 06-06-2000 | AU | 699595 B2 | 10-12-1998 |
| | | | AU | 5699096 A | 29-11-1996 |
| | | | BR | 9608770 A | 07-12-1999 |
| | | | CA | 2221167 A1 | 21-11-1996 |
| | | | DE | 69609068 D1 | 03-08-2000 |
| | | | DE | 69609068 T2 | 08-03-2001 |
| | | | EP | 0826161 A1 | 04-03-1998 |
| | | | ES | 2148762 T3 | 16-10-2000 |
| | | | WO | 9636895 A1 | 21-11-1996 |
| | | | JP | 11505336 T | 18-05-1999 |
| | | | NZ | 307598 A | 27-04-1998 |

EPO FORM P0459

For more details about this annex : see Official Journal of the European Patent Office, No. 12/82